# EUROPEAN PATENT APPLICATION

(11) **EP 1 091 552 A2**
(43) Date of publication of application: **11.04.2001**
(21) Application number: 00308729.3
(22) Date of filing: 04.10.2000
(51) Int. Cl.: H04M 7/00

(54) **Method and apparatus for providing telephone service using TDM switches and data transport networks**

(30) Priority: 04.10.1999 US 411842
(71) Applicant: Nortel Networks Limited, Montreal, Quebec H2Y 3Y4 (CA)
(72) Inventor: Sylvain, Dany D., Gatineau, Quebec J8T 7R8 (CA)
(74) Representative: Mackenzie, Andrew Bryan

(57) **Abstract**

A method and apparatus for providing telephone service using a data transport network (44) includes an inter-media gateway (10) adapted to transfer voice-grade data to and from the data transport network. The inter-media gateway is a trunk side network adaptor for TDM telephone switches (22) adapted to operatively interconnect with a trunk side of the telephone switch to exchange internal call control messages and voice-grade pulse code modulated data. The integrated media gateway is addressable on the data transport network and is operatively interconnected with the data transport network to exchange signaling messages and data. The method comprises sending call setup messages (104-132) associated with a telephone call between the telephone switches over a common channel signaling network (48) of a switched telephone network (42) and setting up a payload transport path through the data transport network in a backwards direction from a terminating telephone switch to an originating telephone switch. The advantages include network component reduction, simplified call set up, and reduced infrastructure and operating costs.

## Description

### TECHNICAL FIELD

The present invention relates to the transfer of voice and voice-grade telephone data over data transport network facilities. In particular, the invention relates to a method and apparatus for providing telephone service in which a telephone switching office is directly connected to a data transport network by a plurality of trunk side network adaptors that emulate a time division multiplexed (TDM) trunk network adaptor to the telephone switching office, and emulate a data access node to the data transport network.

### BACKGROUND OF THE INVENTION

The introduction of the Internet to the general public and the ensuing exponential increase in interest and demand for access to the Internet through telephone service provider networks has placed considerable strain on existing telecommunications infrastructure. Telephone service provider networks are being congested by the increase in voice-grade data traffic over an infrastructure that was not designed to support it. This exponential increase in demand is particularly responsible for the exhaustion of resources at the access tandem level of the public switched telephone network (PSTN).

Concurrently with increased demand for telephone services, most regulatory authorities have now opened the telephone service market to competition. Consequently, incumbent service providers no longer enjoy a monopoly. This makes a massive capital investment in infrastructure unattractive. A keen interest has therefore developed in new methods for increasing call handling capacity and reducing overhead and operating costs. Voice and voice-grade data services over ATM networks have been proposed by the Applicants and several new network elements and protocols have been invented by the Applicants to augment the PSTN. Exemplary of these inventions are: European Patent Application Serial No. 99307481.4 filed September 21, 1999 and entitled TRANSIT TRUNK SUBNETWORK SYSTEM; European Patent Application Serial No. 99309782.3 filed December 6, 1999 and entitled HYBRID TDM AND ATM VOICE SWITCHING CENTRAL OFFICE AND METHOD OF COMPLETING INTER-OFFICE CALLS USING SAME; and, European Patent Application Serial No. 99307704.9 filed September 29, 1999 and entitled METHOD AND APPARATUS FOR REDUCTION OF CALL SETUP RATE IN AN ATM NETWORK.

The inherent advantages and disadvantages of ATM networks are well known. ATM offers flexible routing solutions that enable more efficient use of resources than the traditional hierarchical structure that has evolved in the PSTN. However, interfacing between TDM and ATM facilities has proven to be a challenge. Many of the prior art solutions have left issues of ownership and maintenance responsibility blurred because interfaces between the two networks have not entirely belonged to one or the other of the networks, or have required maintenance operations from each network. Although there is a strong desire to use data transport networks to support voice and voice-grade data services, there has also been a desire expressed for a clearer division of equipment as well as operations and maintenance responsibilities between the PSTN and data transport service providers.

A principal focus of the technical developments respecting the use of data transport networks to relieve congestion in the PSTN has been the use of ATM networks as a transport backbone for voice and voice-grade data. While this focus has lead to the invention of many valuable tools useful in providing reliable service at competitive rates, the problem of inter-office trunking growth has only been partially addressed. There therefore exists a need for a method and apparatus capable of handling trunking growth economically, while reducing overhead maintenance costs in order to enable the provision of telephone services at competitive prices.

There also exists a need for an innovation that enables the evolution to a new generation of telephone central offices. The new generation of telephone central offices preferably preserves the existing infrastructure in subscriber loops and TDM switching equipment, while permitting a scalable, seamless transition to more cost effective and efficient trunking facilities provided by a data transport network, such as an ATM backbone or an IP network with quality of service (QoS).

### OBJECTS OF THE INVENTION

It is therefore an object of the invention to provide a method for providing telephone service to subscribers that efficiently utilizes existing network facilities, while permitting seamless evolution of incumbent switching equipment to a new generation of central office switch that interfaces directly to a data transport network.

It is a further object of the invention to provide an apparatus for providing telephone service that permits a seamless evolution of incumbent telephone switching equipment to a new generation of central office switch that interfaces directly to a data transport network.

It is yet a further object of the invention to provide a new generation of network adaptors that connect directly to the fabric of a time division multiplexed (TDM) switch and permit and the TDM switch to be connected directly to a data transport network.

It is another object of the invention to provide a new method of call setup for TDM telephone calls in which switches in the TDM network exchange messages directly for call setup through a data transport network.

It is yet a further object of the invention to provide a flat time division multiplexed (TDM) network in which all of the TDM switches in the flat network are interconnected by virtual trunk groups setup through a data transport network.

### SUMMARY OF THE INVENTION

In accordance with a first aspect of the invention, there is provided a network adaptor for a trunk side of a time division multiplexed (TDM) telephone switch, comprising a first instance of control software and hardware that interfaces with the TDM switch, a second instance of control software and hardware that interfaces with a data transport network, communicates with the first instance and with corresponding second instances of control software and hardware in corresponding network adaptors of other TDM telephone switches to establish and maintain circuits for the transfer of data related to calls switched by the TDM telephone switch, **CHARACTERIZED** by:
the network adaptor performs the functions of a TDM controller for the trunk side of the TDM switch and replaces other adaptors on the trunk side of the TDM switch.

The invention also provides a time division multiplexed (TDM) switch for switching voice-grade pulse code modulated (PCM) data, the TDM switch having a trunk side, comprising a call manager having an interface to a common channel signaling network, the call manager being adapted to formulate, send, receive and interpret common channel signaling messages related to call control, and further adapted to formulate, send, receive and interpret internal call control messages sent to and received from trunk side controllers of the TDM switch, and a switch fabric through which calls are switched for call processing, **CHARACTERIZED** by:
at least one trunk side network adaptor, the at least one trunk side network adaptor having a first instance of control software and hardware that interfaces with the TDM switch and performs the functions of a TDM controller for the trunk side of the TDM switch, and a second instance of control software and hardware that interfaces with a data transport network, and communicates with the first instance of control software, and with corresponding second instances of control software in corresponding trunk side network adaptors of other TDM switches, to establish and maintain circuits for the transfer of data related to calls switched by the TDM switch.

The invention further enables a method of providing telephone service to a plurality of subscribers using a switched telephone network which includes a plurality of time division multiplexed (TDM) switches having a trunk side to which a plurality of trunk side network adaptors that interface with a data transport network are connected, **CHARACTERIZED** by.
sending call setup messages directly between each pair of originating/terminating TDM switches involved in a call; and
setting up transport for the call using a data transport address contained in Initial Address Messages (IAMs), to set up calls through the data transport network in a backwards direction from the terminating switch to the originating switch in the switched telephone network.

The data transport network with which the trunk side network adaptors in accordance with the invention are interfaced may be any data transport network that provides a quality of service (QoS) suitable for the provision of telephone service. Asynchronous transfer mode (ATM) networks are suitable and currently preferred. Internet Protocol networks are also an option, as well as Multi-Protocol Label Switched (MPLS) networks, for example.

The method and apparatus in accordance with the invention provide many advantages over the prior art. The invention permits a simple, scalable migration from narrowband transport facilities to broadband data transport network facilities. Existing narrowband transport facilities need not be abandoned, but can be gradually adapted to work with data transport networks. Because the invention allows calls from TDM switches with network adaptors to be setup dynamically with any other TDM switches with network adaptors using the data transport network, the need for a second stage of TDM switching (commonly referred as tandem, transit or class 4 switches) is greatly reduced.

### PREFERRED FEATURES OF THE INVENTION

The preferred features of the invention include a method of providing telephone service to a plurality of subscribers using a switched telephone network which includes a plurality of time division multiplexed (TDM) switches having a subscriber side that supports subscriber equipment and a trunk side to which a plurality of trunk side network adaptors that interface with a data transport network are connected, comprising the steps of:
a) accepting call requests from the subscriber equipment on the subscriber side of the respective TDM switches;
b) translating a dialed number associated with each call request to determine a terminating switch for the call;
c) if the terminating switch is a one of the TDM switches, formulating an Integrated Services Digital Network User Part (ISUP) Initial Address Message (IAM) containing a data transport network address of a trunk side network adaptor on the originating switch;
d) addressing the IAM directly to the terminating switch and forwarding the IAM into a signaling network associated with the switched telephone network;
e) receiving the IAM at the terminating switch and extracting the data transport network address from the IAM;
f) passing information contained in the IAM to a trunk side network adaptor on the terminating switch, the trunk side network adaptor being associated with a trunk side network adaptor in the originating switch to an extent that each trunk side network adaptor is associated with a virtual trunk group in the data transport network that virtually interconnects the two trunk side network adaptors; and
g) setting up transport for the call in a backwards direction through the data transport network using the data transport network address to locate the trunk side network adaptor on the originating switch.

The data transport network may be an asynchronous transfer mode (ATM) network, in which case the step of setting up transport for the call involves the steps of:
h) examining a table of cached switched virtual circuits (SVCs) established with the trunk side network adaptor on the originating switch to determine whether a cached SVC is available for the call;
i) if a cached SVC is available, removing the SVC from cache and sending a connect message over the SVC to the data transport network address to set up the call and to transfer call related data; and otherwise
j) sending an SVC Setup message into the ATM network using the data transport network address; and
k) if the ATM network sets up the SVC, using the SVC to set up the call and to transfer call related data after the SVC is setup.

The data transport network may also be an Internet Protocol (IP) network, or a Multi-Protocol Label Switched (MPLS) network.

The invention further provides a method of providing telephone service to a plurality of subscribers using a switched telephone network which includes a plurality of time division multiplexed (TDM) switches having a subscriber side that supports subscriber equipment and a trunk side to which a plurality of trunk side network adaptors that interface with a data transport network are connected, comprising the steps of:
a) accepting call requests from the subscriber equipment on the subscriber side of the respective TDM switches;
b) translating a dialed number associated with each call request to determine a terminating switch for the call;
c) if the terminating switch is a one of the TDM switches, formulating an Integrated Services Digital Network User Part (ISUP) Initial Address Message (IAM);
d) forwarding the IAM into a signaling network associated with the switched telephone network;
e) receiving the IAM at the terminating switch;
f) selecting a trunk side network adaptor to terminate the call at the terminating switch;
g) formulating a signaling message containing a data transport network address of the trunk side network adaptor selected to terminate the call to the originating switch;
h) passing information contained in the signaling message to a trunk side network adaptor on the originating switch, the trunk side network adaptor in the originating switch being associated with the trunk side network adaptor in the terminating switch to an extent that each trunk side network adaptor is associated with a virtual trunk group in the data transport network that virtually interconnects the two trunk side network adaptors; and
i) setting up transport for the call in a forward direction through the data transport network using the data transport network address to locate the trunk side network adaptor on the terminating switch.

If the data transport network is an asynchronous transfer mode (ATM) network, the step of setting up transport for the call involves;
j) examining a table of cached switched virtual circuits (SVCs) established with the trunk side network adaptor on the terminating switch to determine whether a cached SVC is available for the call;
k) if a cached SVC is available, removing the SVC from cache and sending a connect message over the SVC to the data transport network address to set up the call and to transfer call related data; and otherwise
l) sending an SVC Setup message into the ATM network using the data transport network address; and
m) if the ATM network sets up the SVC, using the SVC to set up the call and to transfer call related data after the SVC is setup.

The data transport network may also be an Internet Protocol (IP) network or a Multi-Protocol Label Switched (MPLS) network.

### BRIEF DESCRIPTION OF THE DRAWINGS

The invention will now be explained by way of example only and with reference to the following drawings, in which:
FIG. 1 is a schematic diagram of a trunk side network adaptor, referred to as an Inter-media Gateway, for a time division multiplexed telephone switch in accordance with the invention;
FIG. 2 is a schematic diagram of a switched telephone network including telephone switching offices in accordance with the invention;
FIG. 3 is a call flow diagram of a portion of the call control messages exchanged during call setup in the switched telephone network illustrated in FIG. 2 when call set up is conducted in a backwards direction;
FIG. 4 is a schematic diagram of a switched telephone network which includes a telephone switching office in accordance with the invention, and a prior art telephone switching office connected to an interface that provides a gateway to a data transport network;
FIG. 5 is a call flow diagram of a portion of the call control messages exchanged during call setup in the switched telephone network illustrated in FIG. 4; and
FIG. 6 is a call flow diagram of a portion of the call control messages exchanged during call setup in the switched telephone network illustrated in FIG. 2 when call set up is conducted in a forwards direction.

### DETAILED DESCRIPTION OF THE PREFERRED EMBODIMENT

The invention relates to a method and apparatus for providing voice-grade service to subscribers of a switched telephone network. The method and apparatus permit a migration from time division multiplexed switching offices, commonly referred to in the art as "service switching points" (SSPs) to next generations switching offices having trunk side network adaptors which interface directly with data transport networks. The method is enabled by a trunk side network adaptor for the TDM switching offices, hereinafter referred to as an Inter-media Gateway (IMG). The IMG emulates a digital trunk controller to the TDM switching office and emulates a data access node or a subtending data source/sink to the data transport network. The next generation switching office enables a flat network in which switching offices may be interconnected without the use or tandem switches. In a flat network, each switch has connections to every other switch in the network. Each pair of switching offices connected to the data transport network share a pool of virtual trunks established between respective pairs of the IMGs on each switch. An IMG may support more than one virtual trunk group.

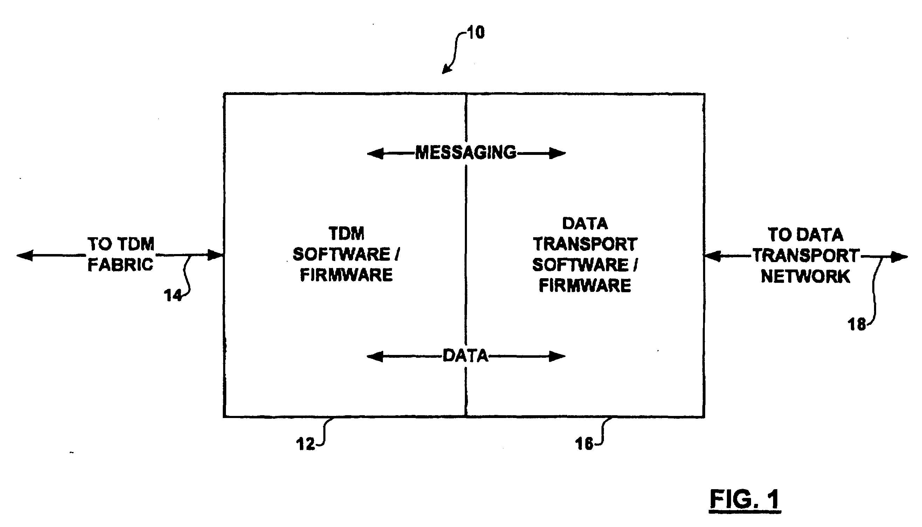

FIG. 1 is a schematic diagram of an Inter-media Gateway (IMG) 10 in accordance with the invention. Each IMG 10 supports a first instance of software and hardware 12 which emulates a TDM digital trunk controller (TDM software/hardware for short) to the TDM switch and is connected to a fabric of the switch by a fabric interface 14, which is well known in the art. The IMG 10 further includes a second instance of software and hardware 16 which interfaces with a data transport network through a data transport link 18. The second instance of software and hardware emulates a data access node in the data transport network (a subtending source/sink node in the network).

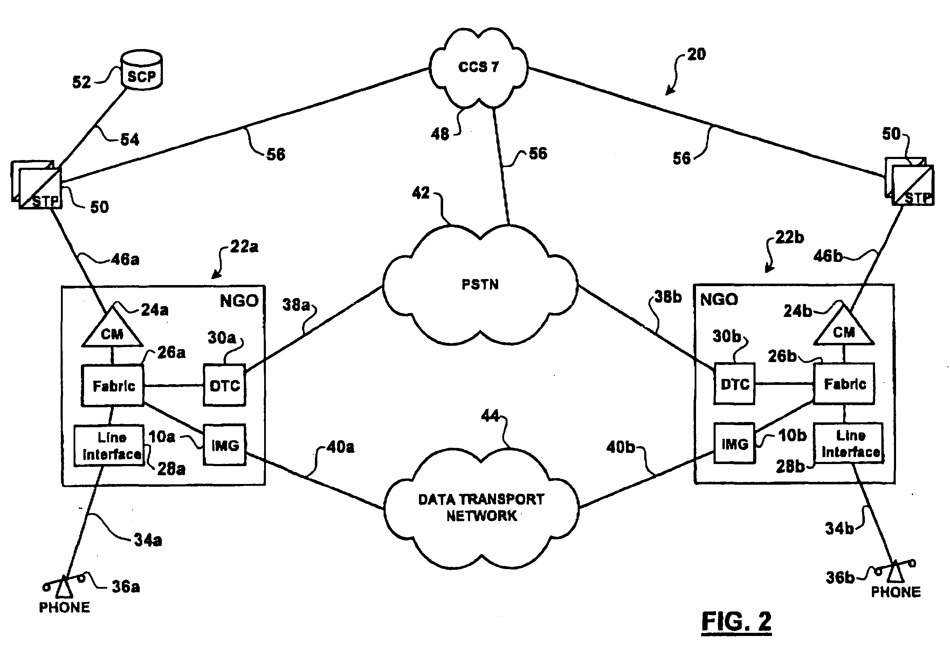

FIG. 2 is a schematic diagram of a switched telephone network 20 which includes a pair of next generation switching offices 22a, 22b in accordance with the invention. The switching offices 22a, 22b are time division multiplexed (TDM) switches, which are well known in the art.

An example of a next generation TDM switch 22a in accordance with the invention includes a call manager 24a which is responsible for call setup and resource management, as is well understood in the art. The call manager 24a is connected to a switch fabric 26a used for switching calls between a line side and a trunk side of the TDM switch 22a. On the line side of the TDM switch 22a, there are a plurality of line interfaces 28a which support subscriber loops 34a that are connected to subscriber equipment 36a, such as telephone sets. The trunk side of the TDM switch 22a is connected to other switches in the switched telephone network 20. The next generation TDM switch 22 may include digital trunk controllers 30, which are connected by TDM trunks 38a to the public switched telephone network (PSTN) 42. The TDM switch 22a also includes a plurality of Inter-media Gateways 10a, hereinafter referred to as IMGs 10a. The IMGs 10a are connected to a data transport network 44 by data links 40a, which are also well known in the art. The next generation TDM switch 22b includes the same components as described above. It is also well understood in the art that the functionality described with blocks 10, 24, 26, 28, and 30 can be grouped physically together in different ways and interconnected in various ways while still providing the same overall functionality.

As is also well understood in the art, the call manager 24a is connected by signaling link 46a to the common channel signaling network, typically a Signaling System 7 (SS7) network 48. The Signaling System 7 network includes signal transfer points (STPs) 50 typically deployed in redundant pairs. It also includes service control points (SCPs) 52 connected to the signaling network by signaling links 54. Signaling links 56 connect the redundant STP pairs 50 to the SS7 network 48.

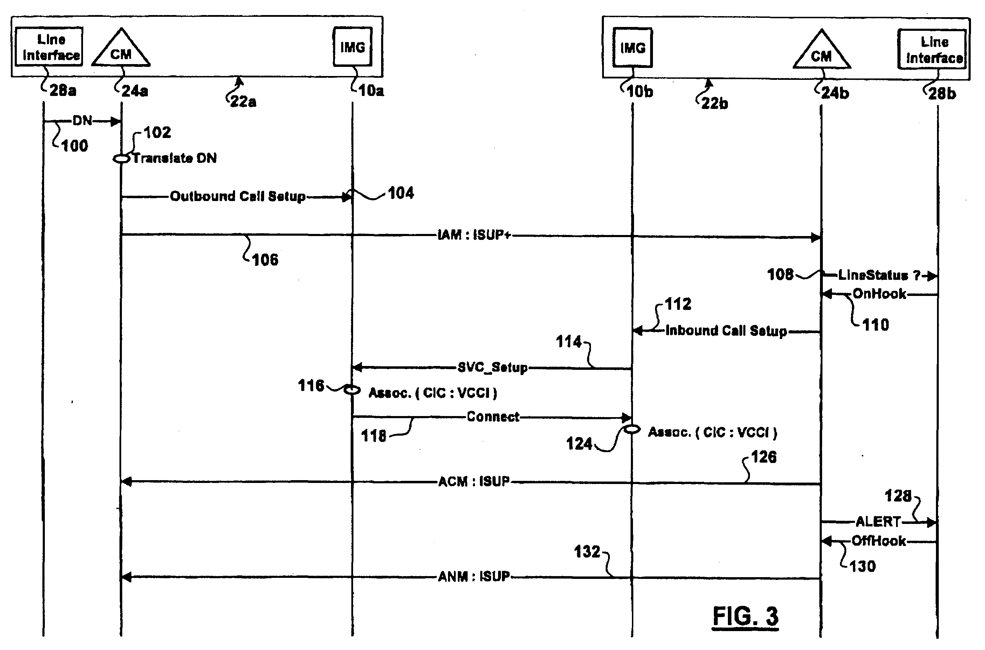

FIG. 3 is a call flow diagram showing a portion of the messages exchanged between next generation TDM switches 22a, 22b in accordance with the invention. In this example, a subscriber places a call from telephone 36a serviced by TDM switch 22a to a subscriber at telephone 36b serviced by TDM switch 22b. The call is initiated when the subscriber takes the telephone 36a (FIG. 2) off-hook and dials the directory number of the subscriber telephone 36b. The dialled number is captured by the line interface 20a in a manner well known in the art. On receipt of the dialled digits, the line interface 28a formulates a call control message and forwards the message to the call manager 24a in step 100. The call manager 24a translates the dialled number (step 102) and determines that the call should be terminated at the next generation TDM switch 22b. Routing tables in the TDM switch 22a indicates that the IMG 10a can be used for outbound call setup. Consequently, the call manager 24a formulates an internal call control message which it passes to the IMG 10a in step 104. The internal message is identical to an equivalent message sent to the digital trunk controller 30a of the TDM switch. It indicates a trunk and channel number (circuit identification code (CIC)) to be used for the call. It also indicates that the call is an outbound call. On receipt of the internal call control message, the TDM software/hardware 12 (FIG. 1) acknowledges receipt in response to the message per a messaging protocol used by the TDM switch 22a. The internal message is then passed to the data transport software/hardware 16 which records the trunk and channel identifiers and awaits receipt of a data transport message relating to the call, to arrive on the data transport network link 18 (FIG. 1).

The call manager 24a then formulates an Integrated Services Digital Network User Part (ISUP) Initial Address Message (IAM) in accordance with the SS7 protocol. The IAM message further includes the data transport network address of the IMG 10a as described in Applicants' copending Patent Application Serial No. 09/158,855 filed September 23, 1998 and entitled TRANSIT TRUNK SUBNETWORK SYSTEM. Because the message includes information additional to a normal IAM message, it is referred to as a ISUP+ message. The call manager 24a forwards the ISUP+ IAM message in step 106 through the common channel signaling network 48 (FIG. 2) to the call manager 24b of the next generation TDM switch 22b. On receipt of the message, the call manager 24b translates the called number and determines that the called number is served by the switching office. Consequently, the call manager 24b sends an internal query message to the line interface 28b to determine the status of the subscriber loop 34b. The line interface returns an internal message in step 110 that the line is available. On receipt of the message in step 110, the call manager 24b formulates an internal call control message which is sent to the IMG 10b in step 112. The internal call control message advises the IMG 10b of an inbound call. The message provides the IMG 10b with a trunk and channel number as well as the data transport network address of the IMG 10a.

On receipt of the internal inbound call setup message in step 112, the IMG 10b either selects a virtual connection through the data transport network 44 to the IMG 10a from a cache of pre-established connections, or requests the setup of a new virtual connection in step 114. In the example shown in FIG. 3, the data transport network 44 is an asynchronous transfer mode (ATM) network and the IMG 10b issues a switched virtual circuit (SVC) Setup request in step 114. On receipt of the Setup message, the IMG 10a maps (step 116) the CIC to the VCCI. The IMG 10a returns a channel identifier (VCCI) of the SVC set up to handle the call. The call manager 24b then sends an ISUP Address Complete Message (ACM) (step 126) to the call manager 24a, in accordance with the SS7 protocol. The call manager 24b then sends an internal call control message to the line interface 28b requesting that the line interface 28b alert the subscriber telephone set 36b of the incoming call. The line interface applies ringing to the line (not shown) and the subscriber responds by taking the telephone set 36b off-hook (step 130). On detecting the off-hook condition, line interface 28b sends an internal call control message (step 130) to the call manager 24b. The call manager 24b sends an ISUP Answer Message (ANM) (step 132) to call manager 24a. Call setup is thus completed and billing, if appropriate, commences on receipt of the ANM message in step 132.

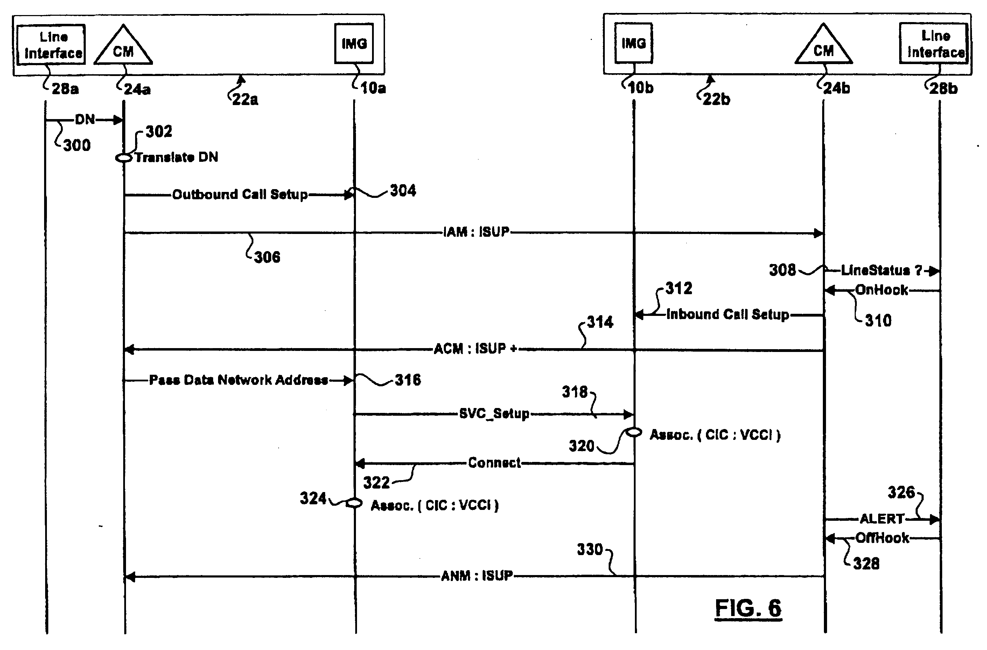

Although the call set up sequence described above was accomplished in a backwards direction from a terminating end of the call, it will be understood by those skilled in the art that it is also possible to have a forward call set up, as will be explained in more detail below with reference to FIG. 6.

As is apparent, call setup between the next generation TDM offices 22a, 22b is accomplished without intervening tandem offices. The data transport network 44 provides virtual direct connections between the TDM switches 22a, 22b. Consequently, a "flat" switched telephone network can be constructed in which each next generation TDM switch is directly connected by virtual trunks to each other next generation switch in the switched telephone network 20. As will be understood by those skilled in the art, the number of switches in the flat network may be limited by the number of virtual trunks required to support a demand for service in the network and by the scope of the translation tables required in each next generation TDM switch.

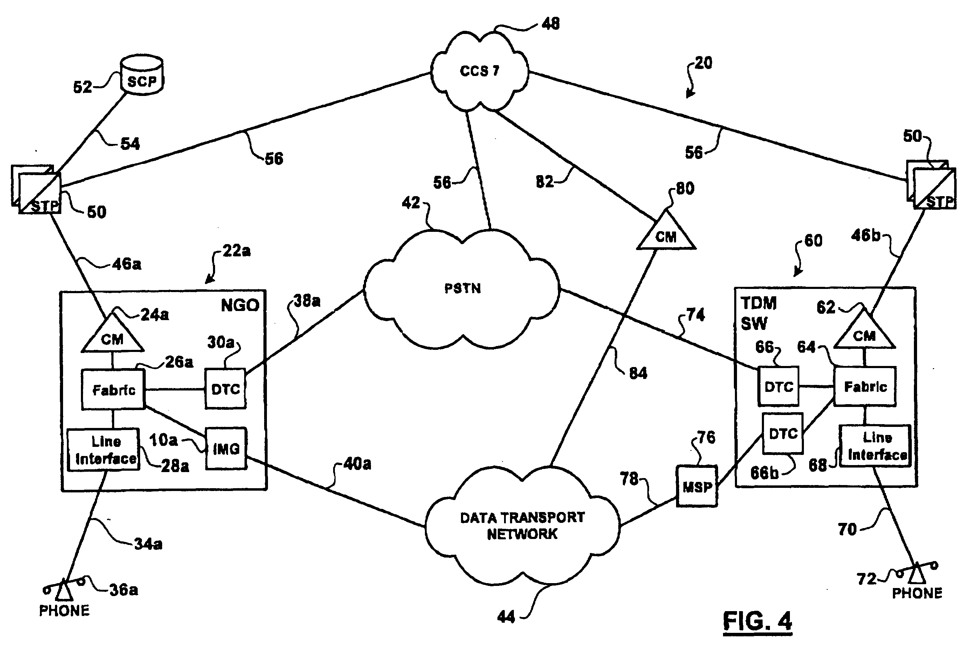

FIG. 4 is a schematic diagram of another switched telephone network configuration in which a next generation TDM switching office 22a, as described above with reference to FIG. 2, is connected through a data transport network to a prior art TDM switch by a Multi-Services Platform (MSP) 76 which was described in detail in Applicants' copending Patent Application Serial No. 09/206,277 filed December 7, 1998, the specification of which is incorporated herein by reference.

The TDM switch 60 includes a call manager 62, a switch fabric 64, a plurality of trunk controllers 66, and a plurality of line interfaces 68 which support subscriber loops 70 connected to subscriber equipment 72. The MSP 76 is connected to the data transport network 44 by a data transport link 78 as described in Applicants' co-pending patent application. The switched telephone network configuration also includes a call manager 80 which is connected to the data transport network 44 by a link 84 and to the common channel signaling network 48 by a signaling link 82. The call manager 80 is enabled to communicate with other nodes in the common channel signaling network 48. The call manager 80 is also enabled to communicate with nodes in the data transport network 44 using the required protocol(s). The functioning of the call manager 80 is described in detail in Applicants' copending patent application referenced above.

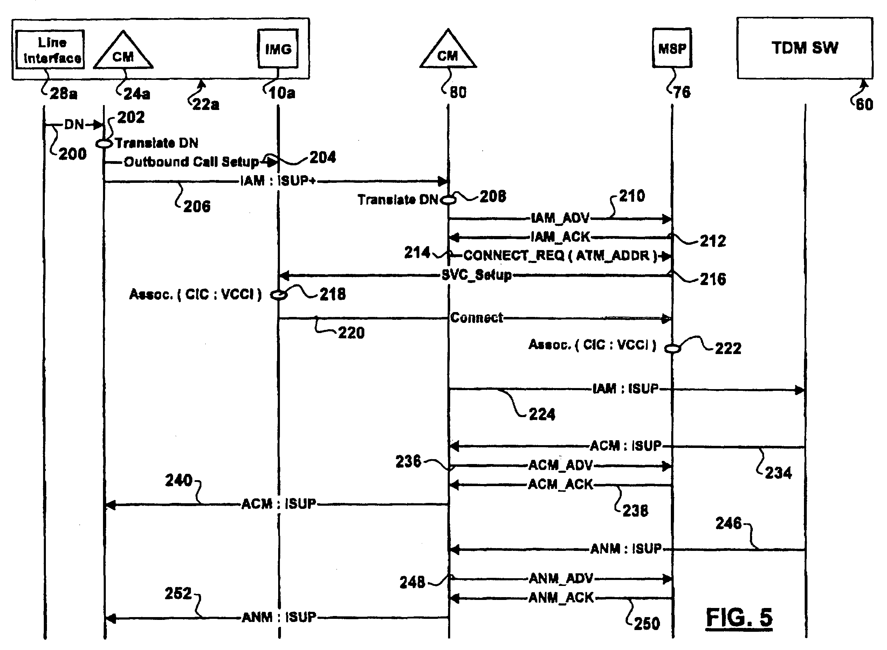

FIG. 5 is a call diagram showing principal messages exchanged during the setup of the call between a subscriber at telephone set 34a connected to the next generation TDM switch 22a and a subscriber at telephone set 72 connected to the TDM switch 60, using virtual trunks set up through data transport network 44. The user at telephone set 34a commences call setup by taking the telephone set 34a off-hook and dialling a directory number of the subscriber owning telephone set 72 (FIG. 4). On receipt of the dialled digits, the line interface 28a sends an internal call control message (step 200) to the call manager 24a which translates the dialled digits in step 202. The routing tables used by the call manager 24b indicate that the call should be switched through the IMG 10a which supports a virtual trunk group associated with call manager 80 which implements, with a number of MSPs 76 (only one of which is shown), a distributed tandem switch. Consequently, the call manager 24a formulates an internal call control message that is sent in step 204 to the IMG 10a. The internal call control message indicates to the IMG 10a that an outbound call is to be set up on a trunk and channel (CIC) indicated in the internal call control message. The IMG 10a acts on the internal call control message as described above. The call manager 24a also formulates an ISUP+ IAM, as described above, and forwards the ISUP+ IAM to the call manager 80 (step 206). Because the TDM switch 60 is not enabled to interpret the ISUP+ messages, the routing tables in the next generation TDM switch 22a direct the call manager 24a to address the ISUP+ IAM to a Point Code of the call manager 80 associated with the distributed tandem switch, as described in Applicants' copending patent application referenced above.

On receipt of the ISUP+ IAM, the call manager 80 translates the dialled number in step 208 and determines that the call should be terminated by the TDM switch 60 and that the trunk group associated with the call is terminated on MSP 76. Consequently, the call manager 80 formulates an IAM Advisory message which it forwards in step 210 over signaling link 84 to the data transport network 44. The IAM Advisory message traverses the data transport network 44 and link 78 to the MSP 76 (FIG. 4). In step 212, the MSP 76 responds to the IAM Advisory message with an IAM Acknowledgement message. On receipt of the acknowledgement, the call manager 80 formulates and returns a Connection Request message which provides the MSP 76 with the data transport network address of the IMG 10a (step 214). When the MSP 76 receives the Connection Request message, it uses the data transport network address contained in the message to select an SVC from cache, or to set up a new SVC through the data transport network 44 and sends an SVC Setup message (step 216). The SVC Setup message traverse the data transport network 44 to the IMG 10a. The IMG 10a processes the Setup message by mapping the VCCI of the SVC to the CIC identifying the trunk and channel used for the call (step 218). The IMG 10a responds with a Connect message in step 220. On receipt of the Connect message, the MSP 76 associates the VCCI with the CIC in step 222. A virtual connection is now established between the next generation TDM switch 22a and the MSF 76.

In the meantime, the call manager 80 formulates a standard ISUP IAM and forwards the IAM to the call manager 62 of TDM switch 60 in step 224. On receipt of the IAM, the TDM switch 60 performs standard call processing functions and establishes an internal connection between the line interface 68 associated with the dialed subscriber and a digital trunk controller 66b (FIG. 4). Meanwhile, the call manager 62 of the TDM switch 60 formulates an ISUP Address Complete Message (ACM) and returns the ACM in step 234 to the call manager 80. On receipt of the ACM, the call manager 80 formulates an ACM Advisory message which it sends through the data transport network 44 (step 236) to the MSP 76 to advise the MSP 76 of the receipt of the ACM. On receipt of the ACM Advisory message, the MSP 76 returns an ACM Acknowledgement message in step 238. When the call manager 80 receives the ACM Acknowledgement message, it forwards an ACM to the call manager 24a in step 240. In the meantime, call manager 62 sends an internal call control message (step 242) to request the line interface 68 to alert the subscriber to the incoming call. On receipt of the alert request, the line interface 68 applies ringing to the line (not illustrated) and the subscriber responds by taking telephone 72 off-hook. The line interface 68 reports the off-hook condition using an internal call control message in step 244. On receipt of the off-hook call control message, the call manager 62 sends an Answer message (ANM) to the call manager 80 in step 246. Call manager 80 responds by sending an ANM Advisory message in step 248 to the MSP 76. The MSP 76 responds by returning an ANM Acknowledgement message in step 250. On receipt of the ANM Acknowledgement message, the call manager 80 forwards an ANM to the call manager 24a (step 252) and call setup is complete.

FIG. 6 is a call flow diagram showing a portion of the messages exchanged between next generation TDM switches 22a, 22b in accordance with the invention during call setup in a forward direction. In this example, a subscriber places a call from telephone 36a serviced by TDM switch 22a to a subscriber at telephone 36b serviced by TDM switch 22b. The call is initiated when the subscriber takes the telephone 36a (FIG. 2) off-hook and dials the directory number of the subscriber telephone 36b. The dialled number is captured by the line interface 20a in a manner well known in the art. On receipt of the dialled digits, the line interface 28a formulates a call control message and forwards the message to the call manager 24a in step 300. The call manager 24a translates the dialled number (step 302) and determines that the call should be terminated at the next generation TDM switch 22b. Routing tables in the TDM switch 22a indicates that the IMG 10a can be used for outbound call setup. Consequently, the call manager 24a formulates an internal call control message which it passes to the IMG 10a in step 304. As explained above with reference to FIG. 3, the internal message is identical to an equivalent message sent to the digital trunk controller 30a of the TDM switch. It indicates a trunk and channel number (circuit identification code (CIC)) to be used for the call. It also indicates that the call is an outbound call. On receipt of the internal call control message, the TDM software/hardware 12 (FIG. 1) acknowledges receipt in response to the message per a messaging protocol used by the TDM switch 22a. The internal message is then passed to the data transport software/hardware 16 which records the trunk and channel identifiers and awaits receipt of further instructions.

The call manager 24a then formulates an IAM in accordance with the SS7 protocol. The call manager 24a forwards the ISUP IAM message in step 306 through the common channel signaling network 48 (FIG. 2) to the call manager 24b of the next generation TDM switch 22b. On receipt of the message, the call manager 24b translates the called number and determines that the called number is served by the switching office. Consequently, the call manager 24b sends an internal query message to the line interface 28b to determine the status of the subscriber loop 34b (step 308). The line interface returns an internal message in step 310 that the line is available. On receipt of the message in step 310, the call manager 24b formulates an internal call control message which is sent to the IMG 10b in step 312. The internal call control message advises the IMG 10b of an inbound call. On receipt of the internal call control message, the IMG 10b awaits the receipt of a resource allocation message to arrive from the data transport network 44.

The call manager 24b then sends an ISUP+ Address Complete Message (ACM) (step 124) to the call manager 24a. The ACM ISUP+ message contains a data transport network address of the IMG 10b, as described above with reference to the IAM ISUP+ message (FIG. 3). It should be understood that the return of the data transport address of the terminating trunk side network adaptor to the originating switch using an ACM message is only one possible method of passing the address. An ISUP Application Transport Mechanism (APM) could also be used, as could a message sent through the data transport network, or any other signaling network.

On receipt of the ISUP+ ACM, the call manager 24a extracts the data network address of the terminating trunk side network adaptor 10b and passes the address in an internal call control message to the IMG 10a (step 316). On receipt of the address in step 316, the IMG 10a either selects a virtual connection through the data transport network 44 to the IMG 10b from a cache of pre-established connections, or requests the setup of a new virtual connection in step 318. In the example shown in FIG. 6, the data transport network 44 is an asynchronous transfer mode (ATM) network and the IMG 10a issues a switched virtual circuit (SVC) Setup request in step 318. On receipt of the Setup message, the IMG 10b maps (step 320) the CIC to the VCCI. The IMG 10b returns a channel identifier (VCCI) of the SVC set up to handle the call in a Connect message (step 322). On receipt of the Connect message, the IMG 10a maps the CIC to the VCCI in step 324.

In step 326, the call manager 24b sends an internal call control message to the line interface 28b requesting that the line interface 28b alert the subscriber telephone set 36b of the incoming call. Step 326 can occur a programmable time after the ACM message has been sent or can be triggered by the reception of the setup message in step 318. The line interface applies ringing to the line (not shown) and the subscriber responds by taking the telephone set 36b off-hook. On detecting the off-hook condition, line interface 28b sends an internal call control message (step 328) to the call manager 24b. The call manager 24b sends an ISUP Answer Message (ANM) (step 330) to call manager 24a. Call setup is thus completed and billing, if appropriate, commences on receipt of the ANM message in step 132.

As will be understood by those skilled in the art, the tear-down of calls made using the network configurations shown in FIGs. 2 and 4 follow procedures in accordance with ISUP signaling that are well known in the art and further detailed in Applicants' co-pending patent applications referenced above.

Although the invention has been described with reference to common channel signaling, and Signaling System 7 in particular, it should be understood that other signaling systems and methods can be used for communications between switches to accomplish call control. Signaling can be performed through the data transport network, as is well understood in the art.

Furthermore, although the invention has been described with reference to central offices for providing telephone service, it should be understood that the methods and apparatus in accordance with the invention are also adapted for use in existing tandem switches, mobile switches or any other similar equipment which uses trunking. It may also be used with any of various devices designed for connecting subscriber equipment directly or indirectly to a telephone switch.

The embodiments of the invention described above are intended to be exemplary only of the invention. The scope of the invention is therefore intended to be limited only by the scope of the appended claims.

## Claims

1. A network adaptor for a trunk side of a time division multiplexed (TDM) telephone switch, comprising a first instance of control software and hardware that interfaces with the TDM switch, a second instance of control software and hardware that interfaces with a data transport network, communicates with the first instance and with corresponding second instances of control software and hardware in corresponding network adaptors of other TDM telephone switches to establish and maintain circuits for the transfer of data related to calls switched by the TDM telephone switch, **CHARACTERIZED** by:
the network adaptor performs the functions of a TDM controller for the trunk side of the TDM switch and replaces other adaptors on the trunk side of the TDM switch.

2. A network adaptor as claimed in claim 1 wherein internal call control messages used for call setup include an indication of whether the call is an inbound call or and outbound call.

3. A network adaptor as claimed in claim 2 wherein if the internal call control message indicates the call is an inbound call, the second instance of control software and hardware uses a data transport network address contained in the internal call control message to establish a connection with the data transport network address, the connection being used for transporting voice-grade data associated with the call through the data transport network.

4. A network adaptor as claimed in claim 2 wherein if the internal call control message indicates that the call is an outbound call, the second instance of control software and hardware waits for a connection request associated with the call to arrive from the ATM network, and takes no further action in processing the call until the connection request message arrives.

5. A network adaptor as claimed in claim 2 wherein if an internal call control message indicates that the call is an outbound call, the second instance of control software and hardware selects a connection from cache or sets up a connection with a network adaptor at a terminating TDM switch for the call, the connection being used for transporting voice-grade data associated with the call through the ATM network.

6. A network adaptor as claimed in any preceding claim wherein the data transport network is an Asynchronous Transfer Mode (ATM) network.

7. A network adaptor as claimed in any preceding claim wherein the data transport network is an Internet Protocol (IP) network.

8. A network adaptor as claimed in any preceding claim wherein the data transport network is an Multi-Protocol Label Switched (MPLS) network.

9. A time division multiplexed (TDM) switch for switching voice-grade pulse code modulated (PCM) data, the TDM switch having a trunk side, comprising a call manager having an interface to a common channel signaling network, the call manager being adapted to formulate, send, receive and interpret common channel signaling messages related to call control, and further adapted to formulate, send, receive and interpret internal call control messages sent to and received from trunk side controllers of the TDM switch, and a switch fabric through which calls are switched for call processing, **CHARACTERIZED** by:
at least one trunk side network adaptor, the at least one trunk side network adaptor having a first instance of control software and hardware that interfaces with the TDM switch and performs the functions of a TDM controller for the trunk side of the TDM switch, and a second instance of control software and hardware that interfaces with a data transport network, and communicates with the first instance of control software, and with corresponding second instances of control software in corresponding trunk side network adaptors of other TDM switches, to establish and maintain circuits for the transfer of data related to calls switched by the TDM switch.

10. A TDM switch as claimed in claim 9 wherein the at least one trunk side network adaptor is adapted to be connected to the switch fabric.

11. A TDM switch as claimed in claims 9 or 10 wherein the call manager sends an ISUP+ Initial Address Message (IAM) when an outbound call is routed through the at least one trunk side network adaptor, the ISUP+ IAM containing all of the information contained in an ISUP IAM, as well as a data transport network address of the second instance of the software and hardware of the at least one trunk side network adaptor that the call manager selects to handle the call.

12. A TDM switch as claimed in claim 11 wherein if an internal call control message indicates that the call is an outbound call, the second instance of the software and hardware waits for a request associated with the call to be received from the data transport network, the request being related to an allocation of resources for the call.

13. A TDM switch as claimed in claim 12 wherein if the internal call control message indicates that the call is an inbound call, the internal call control message includes the data transport network address of a trunk side network adaptor of a TDM switch that originated the call.

14. A TDM switch as claimed in claim 13 wherein if the internal call control message indicates that the call is an inbound call, the second instance uses the data transport network address to allocate resources through the data transport network for transferring call data to the trunk side network adaptor of the TDM switch that originated the call.

15. A TDM switch as claimed in any one of claims 9-14 wherein the data transport network is an asynchronous transfer mode (ATM) network.

16. A TDM switch as claimed in any one of claims 9-14 wherein the data transport network is an Internet Protocol (IP) network.

17. A TDM switch as claimed in any one of claims 9-14 wherein the data transport network is an Multi-Protocol Label Switched (MPLS) network.

18. A flat telecommunications network, comprising a plurality of time division multiplexed (TDM) telephone switches having a line side and a trunk side, a data transport network for transferring voice-grade data between the plurality of TDM telephone switches, each of the plurality of TDM telephone switches being connected to each of the other TDM telephone switches by a virtual trunk group, each virtual trunk group being identified by at least one trunk identification code that uniquely associates two TDM telephone switches connected by the virtual trunk group, **CHARACTERIZED** by:
each of the TDM switches are equipped with a plurality of trunk side network adaptors, each trunk side network adaptor having a first instance of control software and hardware that interfaces with the TDM switch and performs the functions of a trunk side controller of the TDM telephone switch, and a second instance of control software and hardware that interfaces with a data transport network, communicates with the first instance and with corresponding second instances of control software and hardware in corresponding trunk side network adaptors of other TDM telephone switches to establish and maintain circuits for the transfer of data related to calls switched by the TDM telephone switch, each of the second instances of the hardware having an interface adapted for connection to the data transport network.

19. A flat telecommunications network as claimed in claim 18 wherein the plurality of TDM telephone switches use ISUP+ Initial Address Messages (IAMs) for call setup and the IAMs include a data transport network address of the trunk side network adaptor of an originating TDM telephone switch selected for the call.

20. A flat telecommunications network as claimed in claim 19 wherein the data transport network address is used by a trunk side network adaptor at a TDM switch that terminates the call to set up the call backwards through the data transport network, the trunk side network adaptor using the data transport network address to allocate resources for a virtual connection to the trunk side network adaptor in an originating TDM telephone switch.

21. A flat telecommunications network as claimed in claims 19 or 20 wherein the call setup messages are exchanged directly between an originating/terminating pair of the TDM telephone switches, as if there were a direct trunk link between each pair of the plurality of TDM telephone switches, whereby only signal transfer points (STPs) are involved in the transfer of call control messages between the originating/terminating pair of TDM telephone switches.

22. A flat telecommunications network as claimed in claim 21 wherein a TDM switch at a terminating end of a call returns a transport data network address of a trunk side network adaptor selected for call termination to a TDM switch that originated the call, and the TDM switch that originated the call passes the transport network address to a trunk side network adaptor selected to set up the call, and the trunk side network adaptor establishes a circuit for the transfer of data related to the call with the trunk side network adaptor selected to terminate the call.

23. A method of providing telephone service to a plurality of subscribers using a switched telephone network which includes a plurality of time division multiplexed (TDM) switches having a trunk side to which a plurality of trunk side network adaptors that interface with a data transport network are connected, **CHARACTERIZED** by.
sending call setup messages directly between each pair of originating/terminating TDM switches involved in a call; and setting up transport for the call using a data transport address contained in Initial Address Messages (IAMs), to set up calls through the data transport network in a backwards direction from the terminating switch to the originating switch in the switched telephone network.

24. A method as claimed in claim 23 wherein the sending call setup messages is preceded by the steps of:
a) receiving a call request at a originating TDM switch and translating a dialed number associated with the call request to determine a terminating TDM switch for the call;
b) determining a trunk side network adaptor associated with the terminating TDM switch for the call by identifying a virtual trunk group associated with the terminating switch; and
c) sending an internal message to the trunk side network adaptor to alert the trunk side network adaptor to allocate outbound resources for the call and to wait for receipt of a resource allocation message to accomplish the setup of the call.

25. A method as claimed in claims 23 or 24 wherein the data transport network address sent to the terminating switch is the data transport network address of the trunk side network adaptor to which the internal call control message was sent.

26. A method as claimed in any one of claims 23-25 wherein setting up transport for the call involves the steps of:
a) receiving an ISUP+ IAM at the terminating TDM switch;
b) determining that a dialed number in the IAM is associated with a subscriber loop serviced by the terminating TDM switch;
c) determining an availability of the subscriber loop for accepting the call;
d) if the subscriber loop is available, sending an internal call control message to a trunk side network adaptor associated by the virtual trunk group with the first TDM switch, the internal call control message alerting the trunk side network adaptor of an inbound call to be set up through the data transport network.

27. A method as claimed in any one of claims 26 further comprising steps of:
a) on receipt of the internal call control message by the trunk side network adaptor, reserving a trunk and channel for the call on the first instance side of the network adaptor; and
b) allocating resources in the data transport network by sending a resource allocation message to the trunk side network adaptor in the originating TDM switch.

28. A method as claimed in any one of claims 23-27 wherein the data transport network is an asynchronous transfer mode (ATM) network.

29. A method as claimed in any one of claims 23-27 wherein the data transport network is an Internet Protocol (IP) network.

30. A method as claimed in any one of claims 23-27 wherein the data transport network is a Multi-Protocol Label Switched (MPLS) network.
